# EUROPEAN PATENT APPLICATION

(11) **EP 0 739 755 A2**
(43) Date of publication of application: **30.10.1996**
(21) Application number: 96106265.0
(22) Date of filing: 22.04.1996
(51) Int. Cl.: B60B 3/04

(54) **A pressed-steel wheel for motor vehicles**

(30) Priority: 28.04.1995 IT TO950345
(71) Applicant: FERGAT S.p.A., 10090 Rivoli (Torino) (IT)
(72) Inventor: Finetti, Giuliano, 10091 Alpignano, Torino (IT)
(74) Representative: Marchitelli, Mauro

(57) **Abstract**

A pressed-steel wheel for motor vehicles has a rim (12) having an outer seat (16) and an inner seat (18) for housing respective beads of a tyre, and a circumferential channel (22) situated in the vicinity of the outer seat (16). The wheel comprises a disc (14) having a peripheral region (32) which contacts the outer bead seat (16) so as to form a "semi-full-face" profile. The weld between the disc (14) and the rim (12) is formed on the circumferential channel (22) so that the bending stresses on the rim and on the disc (14) are reduced with a consequent reduction in the weight and cost of the wheel (10).

## Description

The present invention relates to a pressed-steel wheel for motor vehicles.

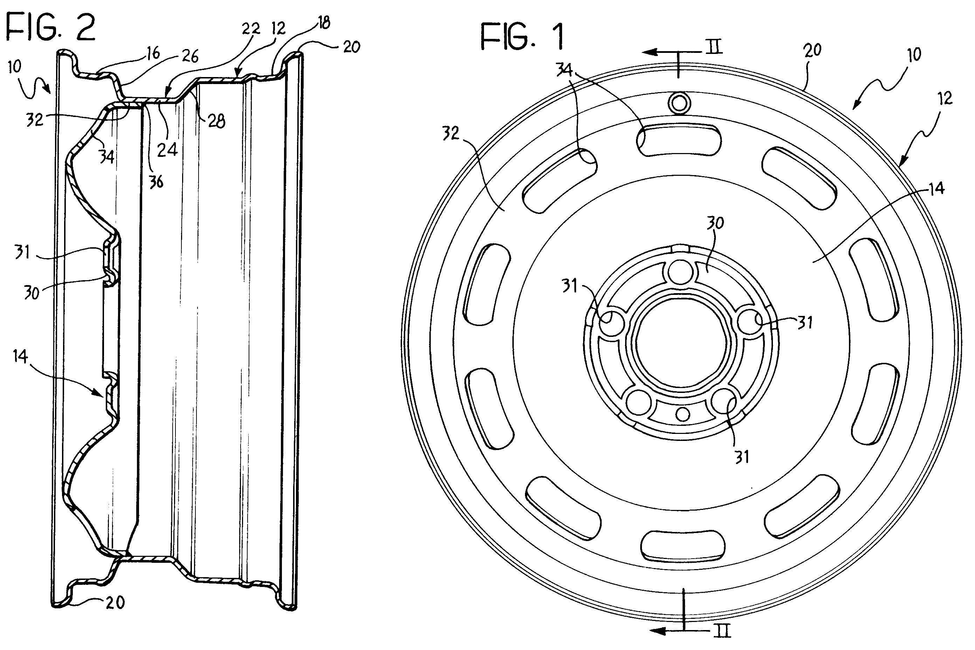

A first structural solution for the manufacture of motor-vehicle wheels which has been known for a long time is shown in Figures 1 and 2 of the appended drawings.

With reference to these drawings, the wheel, indicated 10, comprises a rim 12 and a disc 14, both made of pressed sheet metal. The rim 12 has an axially outer seat 16 and an axially inner seat 18 for housing respective beads of a tyre. The rim 12 has integral side walls 20 which define the bead seats 16 and 18 externally. The rim 12 also has a circumferential channel 22 having a base 24 situated in a radially inner position relative to the bead seats 16 and 18.

The channel 22 has inclined side walls 26 and 28, of which a first (indicated 26) is situated in the immediate vicinity of the outer bead seat 16. As is well known in the art, the circumferential channel 22 is necessary in order to fit the tyre onto the rim and is intended to house one bead of the tyre temporarily before it is fitted in its final seat.

The disc 14 has a central region 30 having holes 31 for the fixing of the wheel to the hub of the vehicle. A peripheral region 32 of the disc 14 has ventilation holes 34 and is welded to the rim 12.

In the known structural solution shown in Figures 1 and 2, the weld between the disc 14 and the rim 12 is formed on the base 24 of the channel 22. The weld bead is indicated 36 in Figure 2.

The fact that the weld between the disc and the rim is formed on the circumferential channel 22 permits a minimal bending stress on the rim and on the disc. The external forces transmitted to the rim by the tyre in fact act on the bead seats 16 and 18. The formation of the connection between the rim and the disc in a region as close as possible to the median plane of the wheel as in the structural solution of Figure 2 achieves the greatest structural strength of the assembly since the widths of the cantilevered portions between the support point 36 and the points of application of the forces 16 and 18 are reduced. This structural solution is also the most convenient to implement since it enables the rim 12 and the disc 14 to be coupled along cylindrical surfaces.

However, the structural solution described above is affected by two important disadvantages both of which depend upon the positioning of the fixing point between the disc and the rim.

The first disadvantage is that the formation of the fixing between the disc and the rim on the internal surface of the channel 22 reduces the space available for the braking equipment. The use of a wheel of this type therefore imposes dimensional constraints on the braking system at the design stage.

The second disadvantage is that the fixing of the disc to the channel greatly reduces the surface of the disc which is available for the formation of ornamental motifs.

Wheels of this type therefore have a poor, highly undifferentiated appearance.

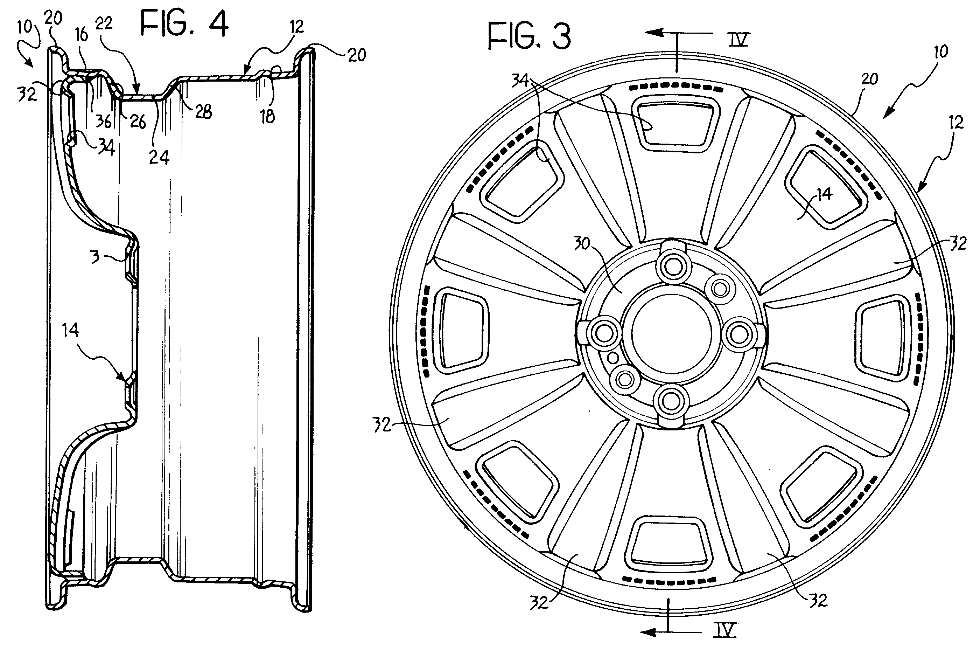

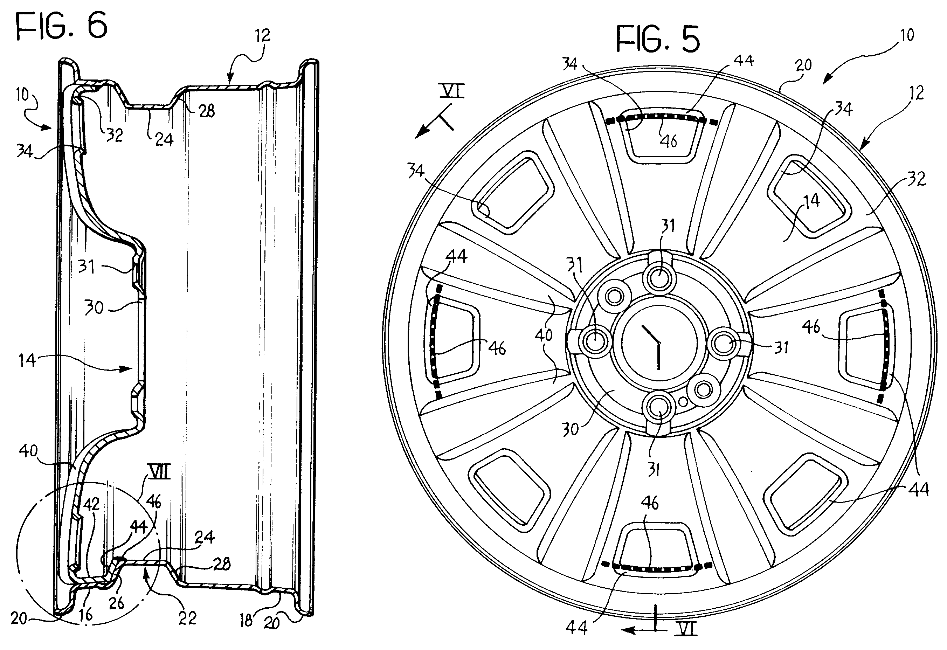

Figures 3 and 4 of the appended drawings show a second known solution in which details corresponding to those described above are indicated by the same reference numerals.

In this second solution, the radially outer region 32 of the disc 14 contacts the outer bead seat 16. A profile of this type is known in the art as a "semi-full-face" profile. The weld 36 between the disc 14 and the rim 12 is formed on the bead seat 16.

By virtue of this characteristic, more space is obtained inside the rim for given dimensions than in the previous solution and therefore there are fewer constraints as regards the size of the braking system. From the aesthetic point of view, this second solution gives decidedly better results than the first because the greater area available for the radially outer portion 32 of the disc enables the design of the outer surface to be embellished with ribs and other ornamental motifs.

However, this solution is worse from the point of view of the mechanical strength of the assembly. In fact, given that the connection between the rim and the disc is situated on a bead seat, the greater part of the rim is cantilevered from the disc. The bending stresses both on the rim and on the disc are greater, for given other characteristics, than in the solution in which the connection between the rim and the disc is formed in a region closer to the median plane of the wheel. This necessitates the use of thicker steel sheet both for the rim and for the disc. This results in an increase in the weight and the cost of the wheel.

On the basis of this prior art, the object of the present invention is to provide a wheel for motor vehicles which overcomes the disadvantages of both of the known solutions without, however, having to forego their advantages.

According to the present invention, this object is achieved by a wheel having the characteristics forming the subject of Claim 1.

In the wheel according to the invention, the peripheral region of the disc contacts the outer bead seat of the rim but the weld between the disc and the rim is formed on the circumferential channel of the rim.

The wheel according to the invention therefore has the same advantages as the second structural solution, described above, from the aesthetic point of view and from the point of view of the availability of space for the braking system. In comparison with this second structural solution, the wheel according to the invention is improved from the point of view of structural strength since the connection between the rim and the disc is formed in a region closer to the median plane of the wheel. This permits a reduction in the bending stresses acting on the rim and on the disc and, for given other characteristics, achieves a reduction in the thickness of the sheet metal with a consequent reduction in the weight and cost of the wheel.

Further characteristics and advantages of the present invention will become clear in the course of the following detailed description, given purely by way of non-limiting example, with reference to the appended drawings, in which:
Figures 1-4, which have already been described above, are front elevational views and cross-sections of two known solutions,
Figure 5 is a front elevational view of a wheel according to the present invention,
Figure 6 is a section taken on the line VI-VI of Figure 5, and
Figure 7 is a detail of the part indicated by the arrow VII in Figure 6, on an enlarged scale.

With reference to Figures 5-7, the wheel 10 has a rim 12 having a shape substantially identical to that of the rims according to the prior art and thus having integral side walls 20, outer and inner bead seats 16, 18, a circumferential channel 22 with a base 24 and two inclined side walls 26, 28.

The wheel 10 has a disc 14 having a radially inner region 30 with holes 31 for its fixing to the hub of the vehicle and a radially outer region 32 which contacts the outer bead seat 16 so as to form a so-called "semi-full-face" disc profile. The outer surface of the disc may be embellished in various ways with ornamental motifs such as, for example, ventilation holes 34, radial ribs 40, or the like. The substantially flat expanse of the radially outer region 32 of the disc 14 is particularly suitable for the formation of original ornamental motifs.

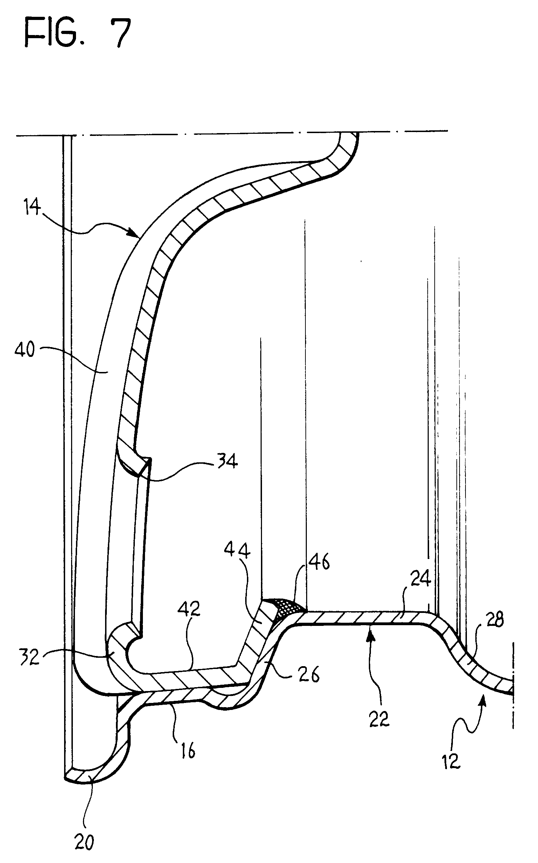

As can be seen in greater detail in Figure 7, the radially outer region 32 of the disc 14 has a portion for coupling with the seat 16, this portion being coupled with the inner surface of the seat 16 with radial interference. The coupling portion of the disc 14, indicated 42 in Figure 7, is inclined slightly to the axis of the wheel to an extent corresponding to the inclination of the seat 16. The coupling portion 42 has an extension 44 which contacts the inclined wall 26 of the circumferential channel 22 and constitutes a fixing portion. The extension 44 projects slightly inwardly relative to the inner surface of the base 44. The weld between the rim 12 and the disc 14 is formed in the connecting region between the base 24 and the side wall 26 of the channel 22. The welding bead is indicated 46 in Figure 7.

Alternatively, the extension 44 could have a cylindrical portion parallel to the base 24 of the circumferential channel 22. In this case, the weld would be formed on the base 24 of the circumferential channel 22. In general, solutions in which the disc contacts the outer bead seat 16 and is welded to the circumferential channel 22 of the rim fall within the scope of the present invention.

The welding bead 46 could extend along the entire circumference of the disc or, as shown in Figure 5, the extension 44 could be present only along discrete portions of the circumference and the weld 46 could be formed only in these portions.

As can be seen in Figure 5, the portions 44 along which the weld is formed between the disc 14 and the rim 12 are situated radially adjacent holes for the fixing to the hub, which are the points through which the forces are transferred between the vehicle and the wheel.

The weld 46 between the rim and the hub on the annular channel 22 of the rim 12 enables the bending stresses both of the rim and of the disc to be reduced in comparison with the situation in which the weld 46 was formed on the outer bead seat 16. As a result, the weight and cost of the wheel according to the invention can be reduced for given other characteristics whilst the aesthetic and functional advantages of a wheel with the "semi-full-face" disc profile are retained.

## Claims

1. A pressed-steel wheel for motor vehicles, comprising:
- a sheet steel rim (12) having an axially outer seat (16) and an axially inner seat (18) for housing respective beads of a tyre, the rim (12) having a circumferential channel (22) with a base wall (24) situated in a radially inner position relative to the bead seats (16, 18), the channel (22) having a side wall (26) situated in the vicinity of the axially outer bead seat (16), and
- a disc (14) having a central region (30) with holes (31) for the fixing of the wheel (10) to the hub of the vehicle and a peripheral region (32) fixed to the rim (12) by welding (46), the peripheral region (32) of the disc (14) contacting the outer bead seat (16) of the rim (12),
characterized to that the peripheral region (32) of the disc (14) has, along at least part of its circumference, a fixing portion (44) which is welded to the circumferential channel (22) of the rim (12).

2. A wheel according to Claim 1, characterized in that the fixing portion (44) contacts the side wall (26) of the channel (22) and is welded in the connecting region between the base (24) and the side wall (26) of the channel (22).

3. A wheel according to Claim 1 or Claim 2, characterized in that the disc (14) has four fixing portions (44) spaced apart circumferentially and each disposed adjacent a respective fixing hole (31) of the disc (14).
